# EUROPÄISCHE PATENTSCHRIFT

(11) **EP 3 821 148 B1**
(45) Veröffentlichungstag und Bekanntmachung des Hinweises auf die Patenterteilung: **05.10.2022**
(21) Anmeldenummer: 19755267.2
(22) Anmeldetag: 05.07.2019
(51) Int. Cl.: F16C 33/10

(54) **GLEITLAGERELEMENT**
SLIDING BEARING ELEMENT
ÉLÉMENT DE PALIER LISSE

(30) Priorität: 10.07.2018 AT 505912018
(43) Veröffentlichungstag der Anmeldung: 19.05.2021
(73) Patentinhaber: Miba Gleitlager Austria GmbH, 4663 Laakirchen (AT)
(72) Erfinder: FUCHS, Josef, 4693 Desselbrunn (AT); HÄDICKE, Lukas, 4813 Altmünster (AT); HARREITHER, Leopold, 4690 Schwanenstadt (AT); HUMER, Johannes, 4655 Vorchdorf (AT); LAHNER, Daniel, 4852 Weyregg (AT); RUMPELMAYR, Martin, 4663 Laakirchen (AT)
(74) Vertreter: Burger, Hannes
(86) Internationale Anmeldenummer: PCT/AT2019/060224
(87) Internationale Veröffentlichungsnummer: WO 2020/010375

(56) Entgegenhaltungen:
- JP-A- 2000 018 252
- JP-A- 2001 050 252
- JP-A- 2007 225 079
- JP-A- 2007 271 013
- JP-U- S6 360 719
- JP-U- H02 117 425
- US-A- 2 852 322
- US-A1- 2009 257 695
- US-A1- 2013 182 981
- US-A1- 2016 102 707

## Beschreibung

Die Erfindung betrifft ein Gleitlagerelement umfassend eine Stützschicht und eine Gleitschicht, wobei in der Gleitschicht zumindest eine Schmiermittelnut ausgebildet ist.

Es ist bekannt, dass bei nasslaufenden Gleitlagern an der Gleitfläche schmiermittelbdingte Probleme mit der Kavitation auftreten. Die Folge davon ist ein Wirkungsgradverlust und insbesondere eine Schädigung der Gleitfläche des Gleitlagers.

Um dem Problem der Kavitation zu begegnen wurden im Stand der Technik bereits unterschiedlichste Lösungen vorgeschlagen. So beschreibt beispielsweise die WO 1999/045285 A1 ein Gleitlager umfassend einen metallischen Träger, eine mit dem Träger verbundene gesinterte poröse Metallschicht und eine in die Poren der porösen Metallschicht infiltrierte und die gesinterte Metallschicht überlagernde Auskleidungsschicht, die PTFE enthält, das bis 10-30 Vol.-% eines teilchenförmigen verschleißfesten Füllstoff, 2-10 Vol.-% fibrillierte Aramidfasern und 2-10 Vol.-% eines schmelzverarbeitbaren Fluorpolymers enthält. Es wird damit die Kavitationserosionsbeständigkeit des Lagers verbessert.

Die DE 10 2008 046 543 A1 beschreibt einen anderen Weg zur Verbesserung der Kavitationsbeständigkeit eines Lagers. Es wird nicht das Lager an sich verändert, sondern wird als Schmiermittel eine ionische Flüssigkeit eingesetzt.

Daneben sind auch noch diverse geometrische Veränderungen von Gleitlagern zur Verbesserung der Kavitationsbeständigkeit beschrieben worden. Z.B. ist aus der JPH 11-270556 A ein Lager bekannt, bei dem eine Mehrzahl von geneigten Flächen ausgebildet wird, um einen gradierten Übergang zu schaffen und so eine abrupte Formänderung der Lagerfläche zu vermeiden.

Andere Beispiele für Versuche die Kavitationsprobleme über geometrische Veränderungen von Gleitlagern in den Griff zu bekommen sind aus der JP 2001-050252 A oder der JP 2003-222119 A bekannt. JP 2007-225079 A beschreibt ein gattungsgemäßes Gleitelement.

Der vorliegenden Erfindung liegt die Aufgabe zugrunde, die Beständigkeit eines Gleitlagers gegen Kavitationserosion zu verbessern.

Diese Aufgabe der Erfindung wird bei dem eingangs genannten Gleitlager dadurch gelöst, dass eine Bodenfläche der Schmiermittelnut eine Oberfläche mit einer Oberflächenstruktur aufweist, wobei die Oberflächenstruktur eine Mehrzahl von Vertiefungen aufweist.

Durch die Ausbildung der Mehrzahl an Vertiefungen können spontan auftretende Strömungsänderungen des Schmiermittels im Schmierspalt aufgrund des Vorhandenseins der Schmiermittelnut besser vermieden werden, indem stark schwankende Druckunterschiede mit den Vertiefungen vermieden werden können. Mit Hilfe der Vertiefungen können auftretende Unterdruckspitzen auf ein größeres Areal verteilt werden, wodurch der Effekt diese Unterdruckspitzen reduziert wird. Es kann also mit der Oberflächenstruktur die Kavitationserosion von Gleitflächen von Gleitlagern deutlich reduziert werden. Zudem hat die Ausbildung der Oberflächenstruktur den Vorteil, dass sie relativ einfach herstellbar und damit zumindest annähernd kostenneutral in Hinblick auf die Herstellkosten des Gleitlagerelementes ist.

Zur Verstärkung dieses Effektes kann nach Ausführungsvarianten vorgesehen sein, dass
- die Vertiefungen einen maximalen Durchmesser in Draufsicht betrachtet aufweisen, der ausgewählt ist aus einem Bereich von 0,1 mm bis 60 mm und/oder
- die Vertiefungen eine maximale Tiefe zwischen 0,1 mm und 20 mm aufweisen, und/oder
- ein Maximalabstand zwischen benachbarten Vertiefungen ausgewählt ist aus einem Bereich von 0,1 mm bis 60 mm.

Es wird damit eine relativ dichte Anordnung der Vertiefungen auf der Oberfläche vorgesehen.

Gemäß einer anderen Ausführungsvariante des Gleitlagerelementes kann vorgesehen sein, dass die Vertiefungen in Draufsicht betrachtet eine kreisförmige oder eine ovale oder eine tropfenförmige Querschnittsform aufweisen. Durch die gerundete Querschnittform werden günstigere Strömungsverhältnisse des Kühlmittels, insbesondere des Schmiermittels, geschaffen, die der Kavitationserosion entgegenwirken.

Gemäß einer speziellen Ausführungsvariante des Gleitlagerelementes dazu kann vorgesehen sein, dass die Vertiefungen kugelkalottenförmig ausgebildet sind, wodurch der genannte Effekt der günstigeren Strömungsverhältnisse verstärkt werden kann.

Nach einer anderen Ausführungsvariante des Gleitlagerelementes kann vorgesehen sein, dass die mehreren Vertiefungen in Umfangsrichtung der Gleitschicht hintereinander angeordnet sind, sodass eine wellenförmige Oberflächenstruktur ausgebildet ist, und dass gegebenenfalls in dieser Oberflächenstruktur zumindest eine Radialbohrung für den Einlass des Schmiermittels angeordnet ist. Durch die Anordnung des Schmiermitteleinlasses im Bereich der wellenförmigen Oberflächenstruktur kann ebenfalls die Entstehung von größeren Druckunterschieden aufgrund des Einströmens des Schmiermittels in den Schmierspalt besser vermieden werden.

Gemäß einer Ausführungsvariante des Gleitlagerelementes dazu kann vorgesehen sein, dass die Radialbohrung auf einem Wellenberg der wellenförmigen Oberflächenstruktur angeordnet ist. Es wird damit erreicht, dass dem einströmenden Schmiermittel in Umfangsrichtung vor und nach der Radialbohrung Reservoirs zur Verfügung stehen, in die es einströmen kann, sodass wiederum die Ausbildung von Druckunterschiede besser vermieden werden kann.

Nach einer weiteren Ausführungsvariante des Gleitlagerelementes kann vorgesehen sein, dass ein Randbereich der Vertiefungen konvex abgerundet ist, wodurch der Übergang zwischen den Vertiefungen und der Gleitfläche sanfter ausgestaltet werden kann und damit auch die Strömungsverhältnisse des Schmiermittels positiv beeinflusst werden könnte.

Es kann gemäß einer anderen Ausführungsvariante kann vorgesehen sein, dass die Schmiermittelnut zumindest teilweise eine Tiefe aufweist, die zumindest einer Dicke der Gleitschicht in radialer Richtung entspricht. Es kann damit erreicht werden, dass die Kavitation kontrolliert in einen Bereich verschoben wird, in dem ein kavitationsresistenterer Werkstoff vorhanden ist, beispielsweise der Stahl der Stützschicht.

Zum besseren Verständnis der Erfindung wird diese anhand der nachfolgenden Figuren näher erläutert.

Es zeigen jeweils in stark vereinfachter, schematischer Darstellung:
- Fig. 1: ein Gleitlagerelement in Schrägansicht;
- Fig. 2: ein Detail einer ersten Ausführungsvariante des Gleitlagerelementes in Draufsicht;
- Fig. 3: ein Detail von weiteren Ausführungsvarianten des Gleitlagerelementes in Draufsicht;
- Fig. 4: ein Detail einer anderen Ausführungsvariante des Gleitlagerelementes in Schrägansicht;
- Fig. 5: ein Detail der Ausführungsvariante des Gleitlagerelementes nach Fig. 4 im Querschnitt;
- Fig. 6: ein Detail einer weiteren Ausführungsvariante des Gleitlagerelementes;
- Fig. 7: ein Detail einer Ausführungsvarianten des Gleitlagerelementes in Draufsicht;
- Fig. 8: ein Detail einer weiteren Ausführungsvariante des Gleitlagerelementes in Draufsicht;
- Fig. 9: ein Detail von anderen Ausführungsvariante des Gleitlagerelementes in Draufsicht;
- Fig. 10: ein Detail einer Ausführungsvariante des Gleitlagerelementes in Schrägansicht;
- Fig. 11: ein Detail einer Ausführungsvariante des Gleitlagerelementes im Axialschnitt;
- Fig. 12: ein Detail einer Ausführungsvariante des Gleitlagerelementes im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

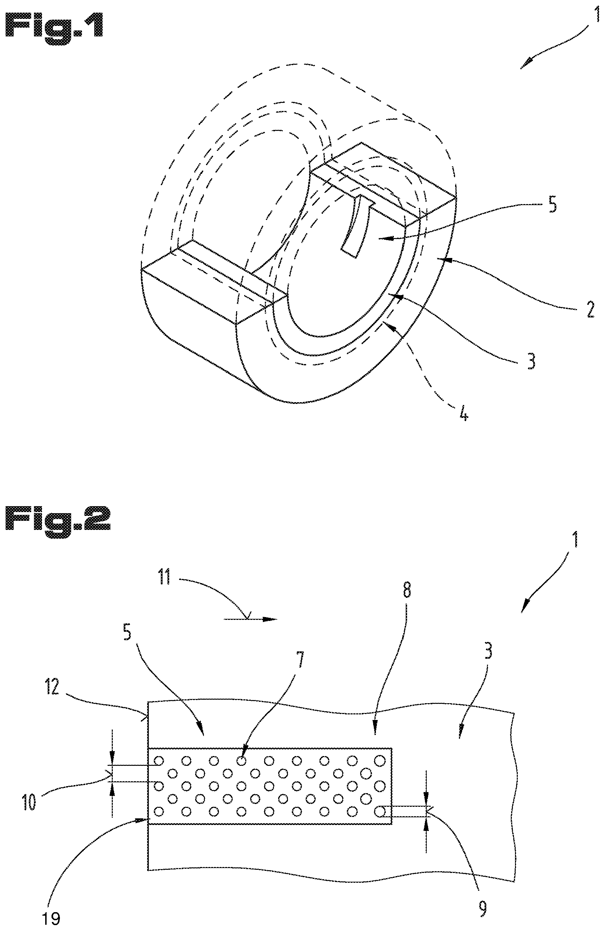

Fig. 1 zeigt ein Gleitlagerelement 1 in Schrägansicht. Das Gleitlagerelement 1 umfasst eine Stützschicht 2 und eine darauf angeordneten und mit dieser verbundenen Gleitschicht 3 bzw. besteht aus diesen beiden Schichten.

Das Gleitlagerelement 1 ist als Halbschale ausgeführt. Nicht erfindungsgemäß, kann das Gleitelement auch anders ausgeführt sein, beispielsweise als Lagerbuchse, wie dies in Fig. 1 strichliert angedeutet ist.

Die Stützschicht 2 besteht üblicherweise aus einem harten Werkstoff. Als Werkstoffe für die Stützschicht 2, auch Stützschale genannt, können Bronzen, Messing, etc. verwendet werden. In der bevorzugten Ausführungsvariante der Erfindung besteht die Stützschicht 2 aus einem Stahl.

Auf der Gleitschicht 3 läuft im Betrieb des Gleitlagerelementes 1 das zu lagernden Bauteil, beispielsweise eine Welle.

Es besteht im Rahmen der Erfindung aber neben der zweischichtigen Ausführung auch die Möglichkeit, das Gleitlagerelement 1 aus mehr als zwei Schichten aufzubauen. Beispielsweise kann zwischen der die Gleitschicht 3 und der Stützschicht 2 eine Lagermetallschicht angeordnet sein. Es besteht dabei die Möglichkeit, dass zwischen dieser Lagermetallschicht und der Gleitschicht 3 oder zwischen der Stützschicht 2 und der Gleitschicht 3 bzw. der Lagermetallschicht zumindest eine Zwischenschicht 4 angeordnet wird, beispielsweise eine Diffusionssperrschicht und/oder eine Bindeschicht.

Derartige konstruktive Aufbauten von Mehrschichtgleitlagern sind prinzipiell aus dem Stand der Technik bekannt, sodass diesbezüglich auf den einschlägigen Stand der Technik verwiesen sei.

In der radial inneren Oberfläche der Gleitschicht 3 ist zumindest eine Schmiermittelnut 5 ausgebildet, über die das Schmiermittel, z.B. ein Schmieröl, dem Lagerspalt zwischen der Gleitschicht 3 und dem gelagerten Bauteil zugeführt wird.

In Fig. 2 ist nun ein Detail einer ersten Ausführungsvariante des Gleitlagerelementes 1 dargestellt, wobei im konkreten die Draufsicht auf die Schmiermittelnut 5 in der Gleitschicht 3 dargestellt ist.

Wie aus Fig. 2 zu ersehen ist, ist eine Bodenfläche 19 zur Gänze mit einer Oberflächenstruktur versehen, wobei die Oberflächenstruktur durch eine Mehrzahl an Vertiefungen 7 in der Bodenfläche 19 gebildet ist. Es ist aber auch möglich, dass nur ein Teil der Bodenfläche 19 mit dieser Oberflächenstruktur versehen ist, beispielsweise nur der Bereich eines Nutauslaufs 8 der Schmiermittelnut 5. Es ist zudem möglich, dass auch die Seitenwände der Schmiermittelnut 5 mit einer derartigen Oberflächenstruktur zumindest teilweise versehen sind.

Die Vertiefungen 7 sind insbesondere in Reihen und Spalten angeordnet. In der in Fig. 2 dargestellten Ausführungsvariante des Gleitlagerelementes 1 ist jede zweite Reihe versetzt angeordnet, sodass die Vertiefungen 7 in Art "auf Lücke" angeordnet sind. Es ist aber auch möglich, dass jede Spalte eine Vertiefung 7 jeder Reihe aufweist, also die Reihen an Vertiefungen 7 nicht versetzt sind.

Das dargestellte und beschriebene Muster der Anordnung bzw. Ausbildung der Vertiefungen 7 hat nur beispielhaften Charakter. Es sind auch andere Muster der Anordnung der Vertiefungen 7 im Gleitlagerelement 1 möglich.

Gemäß einer bevorzugten Ausführungsvariante des Gleitlagerelementes 1 kann vorgesehen sein, dass die Vertiefungen 7 einen maximalen Durchmesser 9 (in Draufsicht betrachtet) aufweisen, der ausgewählt ist aus einem Bereich von 0,1 mm bis 60 mm, insbesondere aus einem Bereich von 5 mm bis 60 mm.

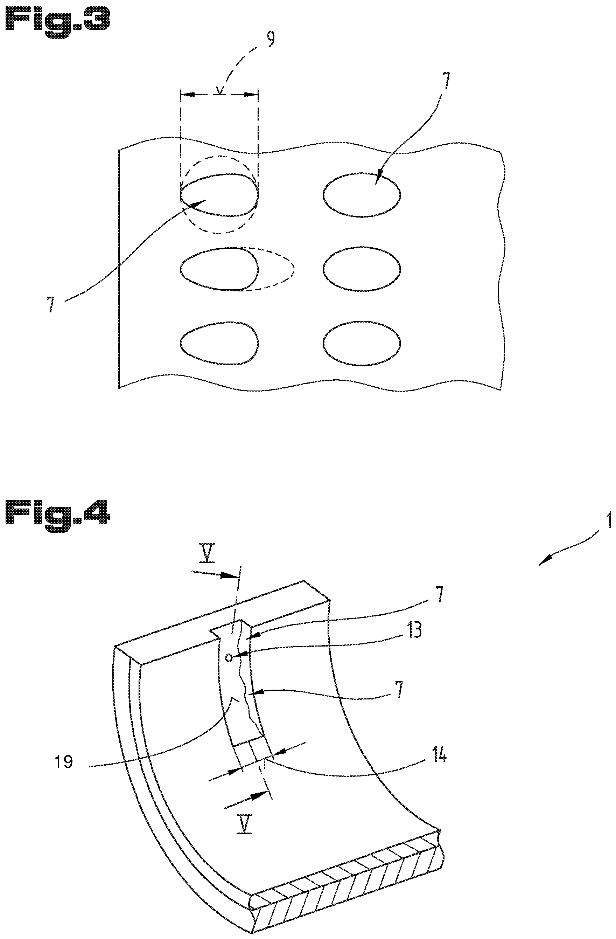

Der maximale Durchmesser 9 ist der Durchmesser des Kreises, der die jeweilige Vertiefung 7 an der Oberfläche der Gleitschicht 3 gerade einhüllt. Im Falle von Vertiefungen 7 mit kreisförmigen Querschnitt an der Oberfläche der Gleitschicht 3, wie dies die Ausführungsvariante des Gleitlagerelementes 1 nach Fig. 2 zeigt, fällt der Kreisdurchmesser somit mit dem maximalen Durchmesser zusammen. Bei nichtkreisförmigen Querschnitten ist der Hüllkreis jener Kreis, der die Querschnittsform der Vertiefung 7 an der Oberfläche der Gleitschicht 3 gerade einschließt, wie dies in Fig. 3 anhand der linken oberen Vertiefung 7 strichliert dargestellt ist.

Gemäß einer weiteren Ausführungsvariante des Gleitlagerelementes 1 kann vorgesehen sein, dass ein Maximalabstand 10 zwischen benachbarten Vertiefungen 7 in der Ebene der Gleitfläche, d.h. der Oberfläche der Gleitschicht 3, ausgewählt ist aus einem Bereich von 0,1 mm bis 60 mm, insbesondere aus einem Bereich von 10 mm bis 50 mm. Zwischen benachbarten Vertiefungen ist dabei kein Abstand größer als der Maximalabstand.

Der Abstand zwischen den Vertiefungen kann ausgewählt sein aus einem Bereich von 10 mm bis 40 mm, insbesondere aus einem Bereich von 10 mm bis 30 mm.

Unter Zugrundelegung dieser geometrischen Abmessungen kann damit die Mehrzahl an Vertiefungen 7 bedeuten, dass zwischen 1 und 10 Vertiefungen 7 pro cm² Fläche angeordnet bzw. ausgebildet sind.

Gemäß einer andern Ausführungsvariante des Gleitlagerelementes 1 kann vorgesehen sein, dass die Vertiefungen 7 eine maximale Tiefe in Richtung senkrecht auf die Gleitfläche, d.h. auf die Oberfläche der Gleitschicht 3, zwischen 0,1 mm und 20 mm, insbesondere zwischen 5 mm und 20 mm, aufweisen.

Die Vertiefungen 7 können alle gleich beabstandet und/oder den gleichen Durchmesser 9, im Sinne der voranstehenden Beschreibung des Durchmessers 9 und/oder die gleiche Tiefe in radialer Richtung aufweisen. Es ist aber auch möglich, dass der Maximalabstand 10 der Vertiefungen 7 variiert. Beispielsweise kann vorgesehen sein, dass der Maximalabstand 10 zwischen benachbarten Vertiefungen 7 in einer Umfangsrichtung 11 des Gleitlagerelementes 1 kleiner wird. Insbesondere kann vorgesehen sein, dass der Maximalabstand 10 zwischen benachbarten Vertiefungen 7 im Bereich des Nutauslaufes 8 kleiner wird, dass also hier die Vertiefungen 7 "dichter" angeordnet sind.

Alternativ oder zusätzlich dazu ist es auch möglich, dass sich die Größe des Querschnittes der Vertiefungen 7 an der Gleitfläche ändert, insbesondere in der Umfangsrichtung 11 kleiner oder größer wird, wobei wiederum vorzugsweise Vertiefungen 7 mit größerem Durchmesser 9 im Bereich des Nutauslaufes 8 angeordnet sein können.

Alternativ oder zusätzlich dazu ist es auch möglich, dass sich die maximale Tiefe der Vertiefungen 7 in radialer Richtung verändert, beispielsweise Vertiefungen 7 mit größerer radialer Tiefe im Nutauslauf 8 angeordnet sind, verglichen mit Vertiefungen 7 die anschließend an eine Stirnfläche 12 des Gleitlagerelementes 1 in der Schmiermittelnut 5 angeordnet sind.

Wie bereits angedeutet besteht nach anderen Ausführungsvarianten des Gleitlagerelementes 1 die Möglichkeit, dass die Vertiefungen 7 an der Gleitfläche der Gleitschicht 3 eine unterschiedliche Form aufweisen. So können die Vertiefungen 7 beispielsweise mit kreisförmigen Querschnitt ausgebildet sein, die dies die Fig. 2 zeigt. Die Vertiefungen können aber auch eine andere Querschnittsform an der Gleitfläche der Gleitschicht 3 aufweisen, beispielsweise eine ovale oder eine tropfenförmige, wie dies die Fig. 3 zeigt. Neben den dargestellten Ausführungsvarianten der Querschnittsform der Vertiefungen an der Gleitfläche der Gleitschicht 3 können diese aber auch noch eine andere Querschnittsform aufweisen, beispielsweise eine sichelförmige, wie dies nachstehend noch dargelegt wird, wobei jedoch Querschnittformen mit Rundungen bevorzugt werden.

Es besteht weiter die Möglichkeit, dass Vertiefungen 7 mit unterschiedlichen Querschnittsformen in der Schmiermittelnut 5 angeordnet bzw. ausgebildet sind, beispielsweise Vertiefungen 7 mit kreisförmigem und mit tropfenförmigem und/oder ovalem und/oder sichelförmigem Querschnitt an der Gleitfläche der Gleitschicht 3.

Sofern die Vertiefungen 7 eine längliche Querschnittsform an der Gleitfläche der Gleitschicht 3 aufweisen, also beispielsweise eine tropfenförmige oder ovale, sind die Vertiefungen 7 vorzugsweise so orientiert, dass die längste Abmessung des Querschnittes der Vertiefungen 7 an der Gleitfläche der Gleitschicht 3 in Richtung der Umfangsrichtung 11 des Gleitlagerelementes 1 verläuft. Prinzipiell ist aber eine Orientierung der längsten Abmessung der Vertiefungen in Axialrichtung möglich.

Vorzugsweise verjüngen sich die Vertiefungen 7 in radialer Richtung. Nach einer bevorzugten Ausführungsvariante dazu können die Vertiefungen 7 kugelkalottenförmig ausgebildet sein.

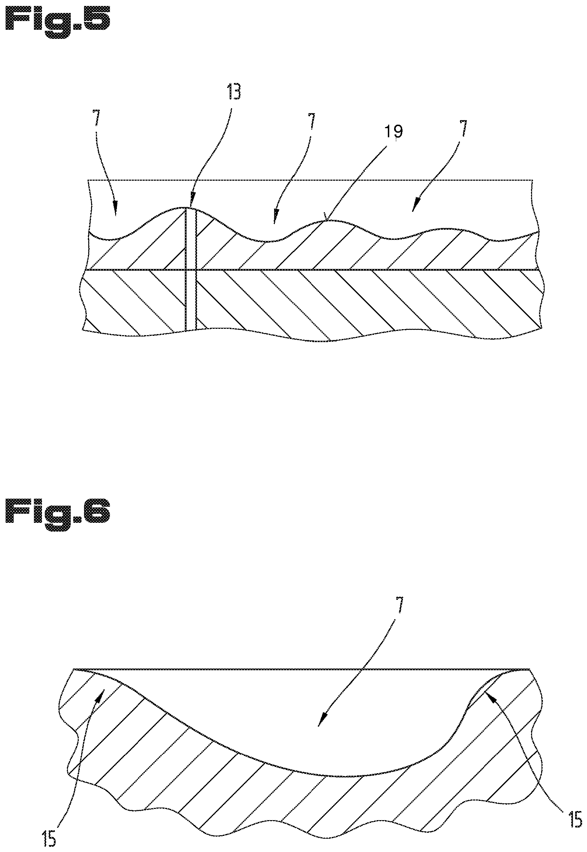

In den Fig. 4 und 5 ist eine andere Ausführungsvariante des Gleitlagerelementes 1 ausschnittsweise dargestellt. Bei dieser Ausführungsvariante sind die Mehrzahl an Vertiefungen 7 in der Umfangsrichtung 11 der Gleitschicht 3 hintereinander angeordnet, sodass der Nutgrund 6 eine wellenförmige Oberflächenstruktur aufweist, wie dies insbesondere aus der Detaildarstellung in Fig. 5 ersichtlich ist. Die Wellen verlaufen insbesondere in der Umfangsrichtung 11.

Weiter kann bei dieser Ausführungsvariante vorgesehen sein, dass in dieser wellenförmigen Oberflächenstruktur zumindest eine Radialbohrung 13 für den Einlass des Schmiermittels angeordnet ist. Diese ist gemäß einer Ausführungsvariante dazu auf einem Wellenberg der wellenförmigen Oberflächenstruktur angeordnet, wie dies ebenfalls die Fig. 4 und 5 zeigen. Prinzipiell ist es aber auch möglich, die Radialbohrung im bzw. in einem Wellental oder in einer Flanke der Welle oder an einer anderen Stelle zu positionieren.

Es können auch mehr als eine Radialbohrung 13 angeordnet bzw. ausgebildet sein, beispielsweise zwei oder drei, etc., wobei vorzugsweise sämtliche in Wellenbergen angeordnet sein können. Entsprechend den voranstehenden Ausführungen können die Radialbohrungen 13 aber auch zumindest teilweise oder zumindest eine der mehreren Radialbohrungen 13 an einer anderen Stelle platziert sein. Die Anzahl der Wellenberge kann generell zwischen 1 und 40, insbesondere zwischen 2 und 10, betragen.

Es ist aber auch möglich, dass derartige Radialbohrungen 13 sowohl in den Wellenbergen als auch in den Wellentälern angeordnet sind.

Weiter verläuft die Welle vorzugsweise über eine gesamte Breite 14 der Schmiermittelnut 5, wie dies die Fig. 4 zeigt. Es ist aber auch möglich, dass mehrere wellenförmige Strukturen nebeneinander ausgebildet sind, die sich jeweils nur über einen Teilbereich der Breite 14 der Schmiermittelnut 5 erstrecken, zusammen aber vorzugsweise die gesamte Breite 14 der Schmiermittelnut 5 abdecken. Dabei können gemäß einer Ausführungsvariante dazu die Wellenberge und die Wellentäler in der Umfangsrichtung 11 des Gleitlagerelementes versetzt, also in Richtung der Breite 14 nicht fluchtend, angeordnet sein.

Bei Ausbildung von mehreren Wellenformen in der Richtung der Breite 14 der Schmiermittelnut 5 nebeneinander kann vorgesehen sein, dass die Wellenstrukturen unterschiedlich große Wellentäler und/oder unterschiedlich große Wellenberge aufweisen.

Wie aus dem Detail der Fig. 6 ersichtlich ist (gezeigt ist ein Schnitt durch eine Vertiefung 7), kann gemäß einer weiteren Ausführungsvariante vorgesehen sein, dass ein Randbereich 15 der Vertiefungen 7 konvex abgerundet ist. Dieser Randbereich 15 kann sich um die gesamte jeweilige Vertiefung 7 erstreckend ausgebildet sein. Es besteht aber auch die Möglichkeit, dass nur die beiden in der Umfangsrichtung 11 des Gleitlagerelementes 1 einander gegenüberliegenden Endbereiche der Vertiefungen 7 als derartig abgerundete Randbereiche 15 ausgebildet sind. Dabei kann vorgesehen sein, dass die konvexen Rundungen der beiden Endbereich 15 einen unterschiedlichen Radius aufweisen. Vorzugsweise ist dabei der stärker gerundete Randbereich 15 in Strömungsrichtung des Schmiermittels gegenüber dem anderen Randbereich 15 der Vertiefung 7 mit der geringer ausgebildeten Rundung voreilend angeordnet bzw. ausgebildet.

Die Schmiermittelnut 5 läuft im Nutauslauf 8 flach in die Gleitfläche der Gleitschicht 3 aus. D.h. eine Tiefe der Schmiermittelnut 5 wird in Richtung des Nutauslaufes 8 kleiner und wird vorzugsweise am Übergang in die Gleitfläche Null.

Es kann vorgesehen sein, dass die Schmiermittelnut 5 ausschließlich in der Gleitschicht 3 ausgebildet ist. Nach einer weiteren Ausführungsvariante des Gleitlagerelementes 1 kann jedoch auch vorgesehen sein, dass die Schmiermittelnut 5 zumindest teilweise eine Tiefe aufweist, die zumindest einer Dicke der Gleitschicht 3 in radialer Richtung entspricht. Die Schmiermittelnut 5 kann sich also zumindest teilweise durch die gesamte Gleitschicht 3 in radialer Richtung erstrecken, insbesondere zumindest im Bereich anschließend an die Stirnfläche 12 des Gleitlagerelementes 1.

Wie bereits voranstehend ausgeführt, können die Vertiefungen 7 auch eine von den voranstehend beschriebenen Formen abweichende Form aufweisen. Beispielsweise kann die Tropfenform beidseitig ausgebildet sein, wie dies in Fig. 3 bei der linken mittleren Vertiefung 7 strichliert angedeutet ist. Die Vertiefungen 7 können also beidseitig zumindest annährend spitz zulaufend ausgebildet sein.

Die Vertiefungen 7 können auch sichelförmig ausgebildet sein.

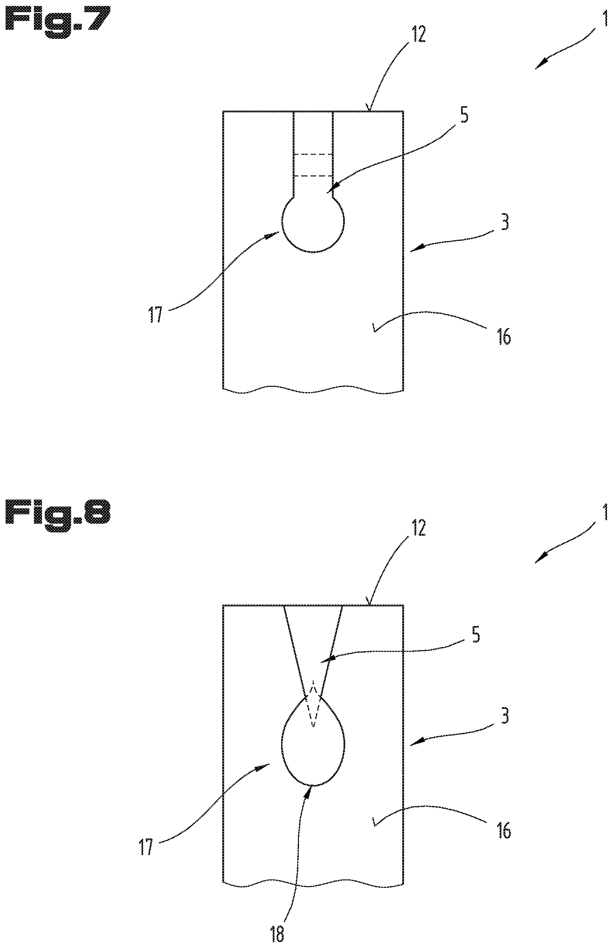

Die Fig. 7 bis 10 zeigen verschiedene Ausführungsformen der Schmiermittelnut 5 in dem Gleitlagerelement 1.

So kann die Schmiermittelnut 5 beispielsweise ausgehend von einer Stirnfläche 12, die in Axialrichtung des Gleitlagerelementes 1 verläuft, einen zumindest annähernd rechteckförmigen Verlauf haben und dann in Richtung auf den Auslauf zur Gleitfläche 16 der Gleitschicht 3 mit einer Querschnittserweiterung 17 versehen sein (jeweils in Draufsicht auf die Gleitfläche 3 betrachtet). Die Querschnittserweiterung 17 kann beispielsweise kreisförmig ausgebildet sein, sodass also die Schmiermittelnut 5 kreisabschnittförmig in die Gleitfläche 16 der Gleitschicht 3 ausläuft.

Wie Fig. 8 zeigt, kann diese prinzipielle Form auch anders ausgebildet sein. So ist es möglich, dass der erste Teil der Schmiermittelnut 5 nicht rechteckförmig ausgebildet ist, sondern in Richtung auf einen Auslauf 18 der Schmiermittelnut 5 in die Gleitfläche 16 der Gleitschicht 3 sich verjüngend, beispielsweise annähernd spitz zulaufend, ausgebildet ist, wie dies in Fig. 8 strichliert angedeutet ist.

Gemäß einer Ausführungsvariante dazu kann aber wiederum die Schmiermittelnut 5 mit der Querschnittserweiterung 17 ausgebildet sein. Generell kann die Schmiermittelnut 5 also mit einer Querschnittsverjüngung versehen sein an die eine Querschnittserweiterung 17 anschließt (jeweils in Draufsicht auf die Gleitfläche 3 betrachtet).

Die Querschnittserweiterung 17 kann ebenfalls kreisförmig ausgebildet sein, wie dies zu Fig. 7 beschrieben wurde, sie kann aber auch annähernd tropfenförmig oder annähernd oval, etc. ausgebildet sein, wobei die geometrischen Formen ineinander übergehen können oder sich schneidend (wie dies z.B. Fig. 8 zeigt) angeordnet sein können.

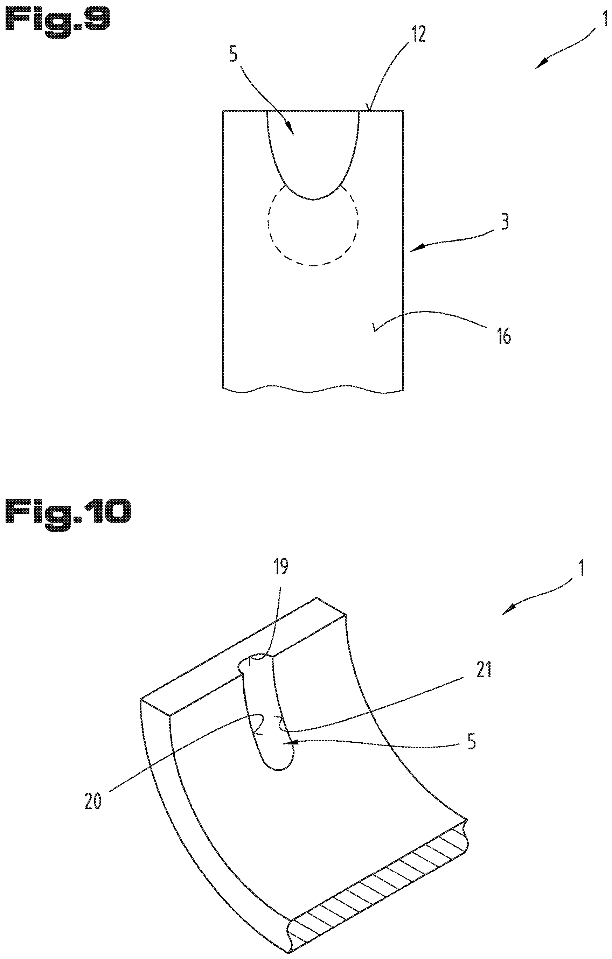

Es können auch zwei runde bzw. gerundete geometrische Formen miteinander kombiniert sein, wie dies aus Fig. 9 ersichtlich ist. Beispielsweise kann die Schmiermittelnut 5 beginnend an der Stirnfläche 12 zumindest annähernd die Form einer halben Ellipse aufweisen. Gegebenenfalls kann sich an diesen ersten Bereich wieder ein zweiter Bereich anschließen, der beispielsweise annähernd kreisförmig oder annähernd oval oder annähernd tropfenförmig, etc. ausgebildet sein kann, wie dies in Fig. 9 strichliert angedeutet ist.

Eine Bodenfläche der Schmiermittelnut 9 kann ebenflächig ausgebildet sein. Wie Fig. 10 zeigt, kann die Bodenfläche 19 der Schmiermittelnut 9 zumindest bereichsweise aber auch mit einer Rundung versehen sein. Beispielsweise kann die Bodenfläche 19 zumindest teilweise einen Rundungsradius aufweisen, der ausgewählt ist aus einem Bereich von 5 mm bis 200 mm, wobei die Rundung auch mit unterschiedlichen Radien ausgeführt sein kann.

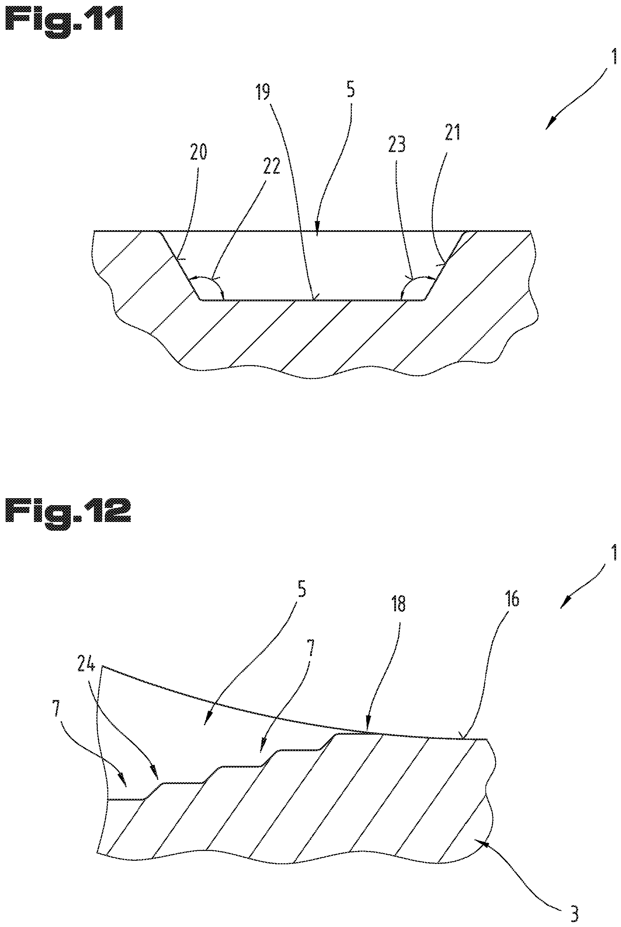

Es ist weiter generell möglich, dass Seitenflächen 20, 21 der Schmiermittelnut im rechten Winkel zur Bodenfläche 19 angeordnet sind. Andererseits kann generell aber auch vorgesehen sein, dass zumindest eine dieser Seitenfläche 20, 21 in einem Winkel 22, 23 zur Bodenfläche 19 angeordnet ist, der ungleich 90 ° ist, wie dies in Fig. 11 dargestellt ist, die einen Schnitt durch die Schmiermittelnut 5 in Axialrichtung durch das Gleitlagerelement 1 zeigt. Der Winkel 22, 23 kann beispielsweise ausgewählt sein aus einem Bereich von 91° bis 170 °, insbesondere aus einem Bereich von 130 ° bis 165 °.

Gemäß einer weiteren Ausführungsvariante des Gleitlagerelementes 1, die in Fig. 12 dargestellt ist, kann vorgesehen sein, dass in Umfangsrichtung des Gleitlagerelementes 1 wiederum mehrere Vertiefungen 7 in der Schmiermittelnut 5 angeordnet sind, die eine unterschiedliche Tiefe aufweisen, wobei die Tiefe ausgehend von der Stirnfläche 12 in Richtung auf den Auslauf 18 der Schmiermittelnut 5 in die Gleitfläche 16 der Gleitschicht 3 kleiner wird. Die einzelnen Vertiefungen 7 schließen jedoch bei dieser Ausführungsvariante unmittelbar aneinander in der Umfangsrichtung an, sodass der Abstand zwischen den Vertiefungen 7 Null ist. Es sind also keine Wellenberge zwischen den Vertiefungen 7 angeordnet. Bevorzugt ist dabei, wenn ein Übergang 24 von einer Vertiefung 7 in die nächste Vertiefung 7 nicht rechtwinkelig zur Gleitfläche 16 angeordnet ist, sondern in Umfangsrichtung des Gleitlagerelementes 1 abgeschrägt. Gegebenenfalls könne Kanten und/oder Ecken der Übergänge 24 gerundet ausgebildet sein.

Es sei darauf hingewiesen, dass in den Fig. 7 bis 12 nur Beispiele für Ausführungsformen von Schmiermittelnuten 5 dargestellt sind.

Es besteht weiter die Möglichkeit, dass die Schmiermittelnut 5 in der Axialrichtung des Gleitlagerelementes 1 nebeneinanderliegend mehrere wellenförmige (wie in fig. 5 dargestellt) oder mehrere treppenartige (wie in Fig. 12 dargestellt) Oberflächenstrukturen aufweisen kann, die im Verlauf gegebenenfalls in Umfangsrichtung verschoben sind, sodass beispielsweis in der Axialrichtung des Gleitlagerelementes 1 betrachtet ein Wellental neben einem Wellenberg angeordnet ist.

Weiter besteht die Möglichkeit, dass der Schmiermittelnut 5 Vertiefungen 7 kombiniert werden. Beispielsweise kann eine Wellenstruktur (Fig. 5) oder eine Treppenstruktur (Fig. 12) zusätzlich in einer der Flächen der Schmiermittelnut 5, beispielsweise der Bodenfläche 19, Vertiefungen 7 aufweisen, beispielsweise jene, die in den Fig. 2 und 3 dargestellt sind.

Die Ausführungsbeispiele zeigen mögliche Ausführungsvarianten, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus des Gleitlagerelementes 1 dieses nicht zwingenderweise maßstäblich dargestellt ist.

### Bezugszeichenaufstellung

- 1: Gleitlagerelement
- 2: Stützschicht
- 3: Gleitschicht
- 4: Zwischenschicht
- 5: Schmiermittelnut

- 7: Vertiefung
- 8: Nutauslauf
- 9: Durchmesser
- 10: Maximalabstand
- 11: Umfangsrichtung
- 12: Stirnfläche
- 13: Radialbohrung
- 14: Breite
- 15: Randbereich
- 16: Gleitfläche
- 17: Querschnittserweiterung
- 18: Auslauf
- 19: Bodenfläche
- 20: Seitenfläche
- 21: Seitenfläche
- 22: Winkel
- 23: Winkel
- 24: Übergang

## Patentansprüche

1. Gleitlagerelement (1), ausgeführt als Halbschale, umfassend eine Stützschicht (2) und eine Gleitschicht (3), wobei in der Gleitschicht (3) zumindest eine Schmiermittelnut (5) ausgebildet ist, die in einer in Richtung der Axialrichtung sich erstreckenden Stirnfläche (12) des Gleitlagerelementes (1) beginnt, wobei eine Tiefe der Schmiermittelnut (5) in Richtung auf einen Nutauslauf (8) kleiner wird, sodass die Schmiermittelnut (5) im Nutauslauf (8) flach in die Gleitfläche der Gleitschicht (3) ausläuft, **dadurch gekennzeichnet, dass** eine Bodenfläche (19) der Schmiermittelnut (5) eine Oberfläche mit einer Oberflächenstruktur aufweist, wobei die Oberflächenstruktur eine Mehrzahl von Vertiefungen (7) aufweist.

2. Gleitlagerelement (1) nach Anspruch 1, **dadurch gekennzeichnet, dass** die Vertiefungen (7) einen maximalen Durchmesser (9) in Draufsicht betrachtet aufweisen, der ausgewählt ist aus einem Bereich von 0,1 mm bis 60 mm.

3. Gleitlagerelement (1) nach Anspruch 1 oder 2, **dadurch gekennzeichnet, dass** die Vertiefungen (7) eine maximale Tiefe zwischen 0,1 mm und 20 mm aufweisen.

4. Gleitlagerelement (1) nach einem der Ansprüche 1 bis 3, **dadurch gekennzeichnet, dass** die Vertiefungen (7) in Draufsicht betrachtet eine kreisförmige oder eine ovale oder eine tropfenförmige Querschnittsform aufweisen.

5. Gleitlagerelement (1) nach Anspruch 4, **dadurch gekennzeichnet, dass** die Vertiefungen (7) kugelkalottenförmig ausgebildet sind.

6. Gleitlagerelement (1) nach einem der Ansprüche 1 bis 5, **dadurch gekennzeichnet, dass** die mehreren Vertiefungen (7) in Umfangsrichtung (11) der Gleitschicht (3) hintereinander angeordnet sind, sodass eine wellenförmige Oberflächenstruktur ausgebildet ist, und dass gegebenenfalls in dieser Oberflächenstruktur zumindest eine Radialbohrung (13) für den Einlass des Schmiermittels angeordnet ist.

7. Gleitlagerelement (1) nach Anspruch 6, **dadurch gekennzeichnet, dass** die Radialbohrung (13) auf einem Wellenberg der wellenförmigen Oberflächenstruktur angeordnet ist.

8. Gleitlagerelement (1) nach einem der Ansprüche 1 bis 7, **dadurch gekennzeichnet, dass** ein Randbereich (15) der Vertiefungen (7) konvex abgerundet ist.

9. Gleitlagerelement (1) nach einem der Ansprüche 1 bis 8, **dadurch gekennzeichnet, dass** die Schmiermittelnut (5) zumindest teilweise eine Tiefe aufweist, die zumindest einer Dicke der Gleitschicht (3) in radialer Richtung entspricht.

10. Gleitlagerelement (1) nach einem der Ansprüche 1 bis 9, **dadurch gekennzeichnet, dass** ein Maximalabstand (10) zwischen benachbarten Vertiefungen (7) ausgewählt ist aus einem Bereich von 0,1 mm bis 60 mm.

## Claims

1. A sliding bearing element (1), embodied as a half shell, comprising a support layer (2) and a sliding layer (3), wherein at least one lubricant groove (5) is formed in the sliding layer (3), which lubricant groove (5) starts in an end face (12) of the sliding bearing element (1) extending in the direction of the axial direction, wherein a depth of the lubricant groove (5) becomes smaller in the direction towards a groove outlet (8), such that the lubricant groove (5) in the groove outlet (8) runs out flat into the sliding surface of the sliding layer (3), **characterized in that** a floor surface (19) of the lubricant groove (5) has a surface with a surface structure, wherein the surface structure has a plurality of recesses (7).

2. The sliding bearing element (1) according to claim 1, **characterized in that** the recesses (7), when viewed from the top, have a maximum diameter (9), which is selected from a range between 0.1 mm and 60 mm.

3. The sliding bearing element (1) according to claim 1 or 2, **characterized in that** the recesses (7) have maximum depth of between 0.1 mm and 20 mm.

4. The sliding bearing element (1) according to one of claims 1 to 3, **characterized in that** the recesses (7), when viewed from the top, have a circular or an oval or a drop-shaped cross-sectional shape.

5. The sliding bearing element (1) according to claim 4, **characterized in that** the recesses (7) are formed in the shape of a spherical cap.

6. The sliding bearing element (1) according to one of claims 1 to 5, **characterized in that** the multiple recesses (7) are arranged one after the other in the circumferential direction (11) of the sliding layer (3), so that a wave-shaped surface structure is formed, and **in that** possibly, at least one radial bore (13) for admitting the lubricant is arranged in said surface structure.

7. The sliding bearing element (1) according to claim 6, **characterized in that** the radial bore (13) is arranged on a wave crest of the wave-shaped surface structure.

8. The sliding bearing element (1) according to one of claims 1 to 7, **characterized in that** an edge region (15) of the recesses (7) is rounded in a convex manner.

9. The sliding bearing element (1) according to one of claims 1 to 8, **characterized in that** the lubricant groove (5) at least partially has a depth which corresponds with a thickness of the sliding layer (3) in the radial direction.

10. The sliding bearing element (1) according to one of claims 1 to 9, **characterized in that** a maximum distance (10) between adjacent recesses (7) is selected from a range between 0.1 mm and 60 mm.

## Revendications

1. Élément de palier lisse (1), composé en tant que demi-coque, comprenant une couche d'appui (2) et une couche de glissement (3),
au moins une rainure de lubrification (5) étant constituée dans la couche de glissement (3) et commençant dans une face frontale (12) de l'élément de palier lisse (1) s'étendant en direction de la direction axiale, une profondeur de la rainure de lubrification (5) diminuant en direction d'une sortie de rainure (8) de telle sorte que la rainure de lubrification (5) dans la sortie de rainure (8) se termine de façon plate dans la surface de glissement de la couche de glissement (3), **caractérisé en ce qu'**une face de fond (19) de la rainure de lubrification (5) présente une surface ayant une structure superficielle, la structure superficielle présentant une pluralité de creux (7).

2. Élément de palier lisse (1) selon la revendication 1, **caractérisé en ce que** les creux (7) présentent en vue de dessus un diamètre (9) maximal qui est sélectionné dans une plage de 0,1 mm à 60 mm.

3. Élément de palier lisse (1) selon la revendication 1 ou 2, **caractérisé en ce que** les creux (7) présentent une profondeur maximale entre 0,1 mm et 20 mm.

4. Élément de palier lisse (1) selon l'une des revendications 1 à 3, **caractérisé en ce que**, en vue de dessus, les creux (7) présentent une forme de section transversale circulaire ou ovale ou en forme de goutte.

5. Élément de palier lisse (1) selon la revendication 4, **caractérisé en ce que** les creux (7) sont constitués en forme de calotte sphérique.

6. Élément de palier lisse (1) selon l'une des revendications 1 à 5, **caractérisé en ce que** les plusieurs creux (7) sont disposés les uns derrière les autres dans la direction circonférentielle (11) de la couche de glissement (3) de telle sorte qu'une structure superficielle ondulée est constituée, et **en ce que**, éventuellement, dans cette structure superficielle il est disposé au moins un alésage radial (13) pour l'entrée du lubrifiant.

7. Élément de palier lisse (1) selon la revendication 6, **caractérisé en ce que** l'alésage radial (13) est disposé sur un sommet d'ondulation de la structure superficielle ondulée.

8. Élément de palier lisse (1) selon l'une des revendications 1 à 7, **caractérisé en ce qu'**une zone de bord (15) des creux (7) est arrondie de façon convexe.

9. Élément de palier lisse (1) selon l'une des revendications 1 à 8, **caractérisé en ce que** la rainure de lubrification (5) présente au moins partiellement une profondeur qui correspond au moins à une épaisseur de la couche de glissement (3) dans la direction radiale.

10. Élément de palier lisse (1) selon l'une des revendications 1 à 9, **caractérisé en ce qu'**un intervalle maximal (10) entre des creux (7) voisins est sélectionné dans une plage de 0,1 mm à 60 mm.
